# EUROPEAN PATENT SPECIFICATION

(11) **EP 3 856 824 B1**
(45) Date of publication and mention of the grant of the patent: **19.10.2022**
(21) Application number: 19786690.8
(22) Date of filing: 11.09.2019
(51) Int. Cl.: C08J 5/18, B32B 27/08, B32B 27/32, C08J 7/04

(54) **COATED HEAT-SHRINKABLE FILMS**
BESCHICHTETE WÄRMESCHRUMPFBARE FOLIEN
FILMS THERMORÉTRACTABLES REVÊTUS

(30) Priority: 28.09.2018 US 201862738022 P
(43) Date of publication of application: 04.08.2021
(73) Proprietor: Dow Global Technologies LLC, Midland, MI 48674 (US); Rohm and Haas Company, Collegeville, PA 19426 (US); PBBPolisur S.r.l., Buenos Aires, C1107CPG (AR)
(72) Inventor: VALLE, Camila Do, 04794-000 Sao Paulo (BR); CASARRUBIAS, Juan Carlos, Toluca, 06500 (MX); SOLARI, Sergio Ariel, Del Viso, 1669 (AR); ZANETTI, Maximiliano, Puerto Madero Buenos Aires, C1107CPG (AR); OLIVEIRA, Marlos Giuntini De, 04794-000 Sao Paulo (BR); GOMES, Jorge Caminero, 04794-000 Sao Paulo (BR)
(74) Representative: Boult Wade Tennant LLP
(86) International application number: PCT/US2019/050563
(87) International publication number: WO 2020/068422

(56) References cited:
- JP-A- 2011 051 592
- US-A1- 2003 157 354
- US-A1- 2017 259 541
- US-A1- 2017 341 353

## Description

### TECHNICAL FIELD

Embodiments described herein relate generally to heat-shrinkable films, and more particularly to heat-shrinkable films having an acrylic-based coating layer. Such heat-shrinkable film can be used as secondary packaging for grouping multiple products together in the process of unitization.

### BACKGROUND

US-A-2017/259541 relates to a shrink film comprising a polyethylene-based film having a top surface, a bottom surface, and comprising one or more layers, wherein at least one layer of the polyethylene-based film comprises a low density polyethylene having a density of from 0.917 g/cc to 0.935 g/cc and melt index, 12, of from 0.1 g/10 min to 5 g/10 min, a linear low density polyethylene having a density of from 0.900 g/cc to 0.965 g/cc and melt index, 12, of from 0.05 g/10 min to 15 g/10 min, or combinations thereof, and a coating layer disposed on the top surface of the polyethylene-based film, wherein the coating layer comprises an adhesive and a near-infrared absorbent material.

US-A-2003/157354 relates to a coated heat-shrinkable polymeric film comprising an oriented substrate comprising a polyolefin and having a first shrinkage percentage; and a coating disposed on at least one side of said substrate, wherein the coated film has a shrink of between 6% and 15% and the shrinkage percentage of the coated film is at least 90% of the first shrinkage percentage.

US-A-2017/341353 relates to a shrink film comprising a polyethylene-based film having a top surface, a bottom surface, and comprising one or more layers, wherein at least one layer of the polyethylene-based film comprises a low density polyethylene having a density of from 0.917 g/cc to 0.935 g/cc and melt index, 12, of from 0.1 g/10 min to 5 g/10 min, a linear low density polyethylene having a density of from 0.900 g/cc to 0.965 g/cc and melt index, 12, of from 0.05 g/10 min to 15 g/10 min, or combinations thereof, and a coating layer disposed on the top surface of the polyethylene-based film, wherein the coating layer comprises an adhesive and a material that absorbs radiation in the near-infrared, visible, and ultraviolet spectral wavelength ranges.

Shrink films are commonly used for packaging of products, such as consumer goods products. For example, bundles of plastic bottles can be secured by a primary shrink film package that secures the plastic bottles together. Primary shrink films may include polymer films that are placed around an object and are shrunken relative to their original dimensions to at least partially surround the object and secure the item or items held within and produce a primary package. For example, plastic beverage containers can be bundled and secured in primary shrink film. Advantages of primary shrink film over other traditional packaging, such as cardboard packaging, may include reduced environmental impact, cost savings, its ability to be see-through, and its ability to serve as both a packaging for shipping as well as for consumer display.

The logistics and supply chain of bringing individually packaged products to market frequently necessitates unitization of the individually packaged products. Unitization is the grouping of several individually packaged products together in order to ease handling, transport, and storage as well as offer protection of the individually packaged products during handling, transport, and storage. Unitization is commonly achieved by applying a secondary shrink film or secondary packaging over the primary shrink film. However, when currently available secondary shrink films are used over primary shrink films to bundle individual primary packages together, it commonly results in adhesion of the secondary shrink film to the primary shrink film after passing through the shrink tunnel. This adhesion is undesirable and results in both structural and visual damage to the individual primary packages resulting in unsaleable or flawed products.

Accordingly, there is a need for films for use in secondary packaging, which unitizes primary packages and eases removal of the underlying primary package without damage.

### SUMMARY

Disclosed in embodiments herein is a heat-shrinkable film. The heat-shrinkable film comprises (a) a multilayer film comprising: i) a first layer comprising from 30 to 100 percent by weight of a first ethylene-based polymer, the first ethylene-based polymer having: a density from 0.905 to 0.930 g/cm3; a melt index (12) of 0.1 to 2.0 g/10 min when measured according to ASTM D 1238 at 190°C and 2.16 kg load; and a peak melting point of less than 126 °C as measured using Differential Scanning Calorimetry (DSC); (ii) a second layer comprising from 50 to 100 percent by weight of a second ethylene-based polymer, the second ethylene-based polymer having: a density from 0.905 to 0.970 g/cm3 and a peak melting point in the range of 100 °C to 135 °C as measured using DSC; and (iii) at least one inner layer between the first layer and the second layer, the inner layer comprising from 10 to 50 percent by weight of a third ethylene-based polymer having a density from 0.930 to 0.970 g/ cm3 and a peak melting point in the range of 120 °C to 135 °C; and (b) a coating on an outer surface of the first layer or second layer of the film, the coating is formed from an aqueous acrylic-based composition comprising: from 30 to 90 wt.% (on a dry wt. basis) of an acrylic resin; from 0.01 to 2.0 wt.% (on a dry wt. basis) of a polyvalent metal crosslinking agent; and from 0.1 to 6.0 wt.% (on a dry wt. basis) of a surface active agent.

Also disclosed herein is a heat-shrinkable film. The heat-shrinkable film comprises (a) a monolayer film comprising from 30 to 60 percent by weight of a fourth ethylene-based polymer, where the fourth ethylene-based polymer has a density of 0.905 to 0.930 g/cm³, a melt index (12) of 0.1 to 0.9 g/10 min when measured according to ASTM D 1238 at 190°C and 2.16 kg load; and a peak melting point of less than 126 °C, as measured using Differential Scanning Calorimetry (DSC); (b) a coating on an outer surface of the monolayer film, the coating is formed from an aqueous acrylic-based composition comprising: from 30 to 90 wt.% (on a dry wt. basis) of an acrylic resin; from 0.01 to 2.0 wt.% (on a dry wt. basis) of a polyvalent metal crosslinking agent; and from 0.1 to 6.0 wt.% (on a dry wt. basis) of a surface active agent.

Also disclosed herein is a packaging assembly. The packaging assembly comprises a plurality of packages, wherein each package comprises a plurality of items bundled together by a primary packaging film comprised of polymeric material, where the primary packaging film is wrapped around the plurality of items to form a primary package. The packaging assembly further includes a secondary packaging film used to bundle the plurality of packages, wherein the secondary packaging film comprises the heat-shrinkable film in accordance with embodiments of the present disclosure.

Also disclosed herein is a method of unitizing primary packages. The method comprises wrapping one or more of the primary packages with an acrylic coated heat-shrinkable film according to embodiments of the present disclosure and applying thermal energy to reduce the dimensions of the heat-shrinkable film to constrain the primary package within the heat-shrinkable film such that the acrylic coating is disposed proximal to the one or more primary packages.

Additional features and advantages of the embodiments will be set forth in the detailed description which follows, and in part will be readily apparent to those skilled in the art from that description or recognized by practicing the embodiments described herein, including the detailed description. It is to be understood that both the foregoing and the following description describes various embodiments and are intended to provide an overview or framework for understanding the nature and character of the claimed subject matter.

### BRIEF DESCRIPTION OF THE DRAWINGS

The following detailed description of specific embodiments of the present disclosure can be best understood when read in conjunction with the following drawings, where like structure is indicated with like reference numerals.

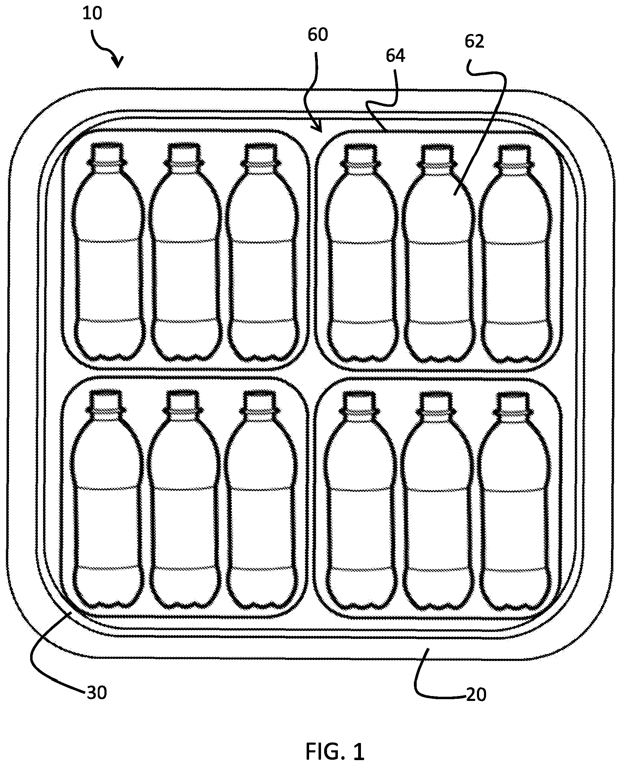

FIG. 1 is a schematic depicting aqueous acrylic-based coated heat-shrinkable film unitizing multiple primary packages in accordance with one or more embodiments of this disclosure.

### DETAILED DESCRIPTION

Reference will now be made in detail to embodiments of heat-shrinkable films comprising a coating on an outer surface of the heat-shrinkable film. The coating alleviates adhesion of the heat-shrinkable film to an underlying primary shrink film used for packaging individual products when the heat-shrinkable film is used to unitize the individual saleable products into a larger parcel for ease of handling and protection during the logistics and supply chain to store shelves. It is noted however, that this is merely an illustrative implementation of the embodiments disclosed herein. The embodiments are applicable to other technologies that are susceptible to similar problems as those discussed above.

### Definitions

The term "polymer" refers to a polymeric compound prepared by polymerizing monomers, whether of the same or a different type. The generic term polymer thus embraces the term "homopolymer," usually employed to refer to polymers prepared from only one type of monomer as well as "copolymer" which refers to polymers prepared from two or more different monomers.

"Polyethylene" or "ethylene-based polymer" shall mean polymers comprising greater than 50% by mole of units derived from ethylene monomer. This includes ethylene-based homopolymers or copolymers (meaning units derived from two or more comonomers). Common forms of polyethylene known in the art include, but are not limited to, Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m- LLDPE); Medium Density Polyethylene (MDPE); and High Density Polyethylene (HDPE).

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 100 MPa (14,500 psi) with the use of free-radical initiators, such as peroxides (see, for example, U.S. 4,599,392). LDPE resins typically have a density in the range of 0.916 to 0.940 g/cm.

The term "LLDPE", includes resin made using Ziegler-Natta catalyst systems as well as resin made using single-site catalysts, including, but not limited to, bis-metallocene catalysts (sometimes referred to as "m-LLDPE"), phosphinimine, and constrained geometry catalysts; and resin made using post-metallocene, molecular catalysts, including, but not limited to, bis(biphenylphenoxy) catalysts (also referred to as polyvalent aryloxyether catalysts). LLDPE includes linear, substantially linear, or heterogeneous ethylene-based copolymers or homopolymers. LLDPEs contain less long chain branching than LDPEs and include the substantially linear ethylene polymers, which are further defined in U.S. Patent No. 5,272,236; U.S. Patent No. 5,278,272; U.S. Patent No. 5,582,923; and U.S. Patent No. 5,733,155; the homogeneously branched ethylene polymers such as those in U.S. Patent No. 3,645,992; the heterogeneously branched ethylene polymers such as those prepared according to the process disclosed in U.S. Patent No. 4,076,698; and blends thereof (such as those disclosed in U.S. Patent No. 3,914,342 or U.S. Patent No. 5,854,045). The LLDPE resins can be made via gas-phase, solution-phase or slurry polymerization or any combination thereof, using any type of reactor or reactor configuration known in the art. The LLDPE resins can be made via gas-phase, solution-phase, or slurry polymerization or any combination thereof, using any type of reactor or reactor configuration known in the art.

The term "HDPE" refers to polyethylenes having densities of about 0.940 g/cm or greater, which are generally prepared with Ziegler-Natta catalysts, chrome catalysts or even metallocene catalysts.

"Polypropylene" or "propylene-based polymers" shall mean polymers comprising greater than 50% by weight of units which have been derived from propylene monomer. This includes polypropylene homopolymers or copolymers (meaning units derived from two or more comonomers). Common forms of polypropylene known in the art include homopolymer polypropylene (hPP), random copolymer polypropylene (rcPP), impact copolymer polypropylene (hPP + at least one elastomeric impact modifier) (ICPP) or high impact polypropylene (HIPP), high melt strength polypropylene (HMS-PP), isotactic polypropylene (iPP), syndiotactic polypropylene (sPP), and combinations thereof.

"Multilayer structure" means any structure having more than one layer. For example, the multilayer structure (for example, a film) may have two, three, four, five or more layers. A multilayer structure may be described as having the layers designated with letters. For example, a three layer structure having a core layer B, and two external layers A and C may be designated as A/B/C. Likewise, a structure having two core layers B and C and two external layers A and D would be designated A/B/C/D.

The terms "heat-shrinkable film," "shrink film," or "collation shrink films" refers to any polymer film material that can be shrunken to fit around and secure one or more items. This may encompass "primary packaging" and "secondary packaging." Without being bound by theory, shrinkage in shrink films may occur due to relaxation of the orientation stresses of the plastics during the shrink process. Shrink films may include polymers such as, but not limited to, ethylene-based polymers or propylene-based polymers as referenced above. Shrink films may be in multi-layer structures, or in a monolayer structure.

The term "primary packaging" refers to polymer films that are placed around an object and are shrunken relative to their original dimensions to at least partially surround the object and secure the item or items held within and produce a primary package. The primary package is generally the saleable item placed on a store shelf or delivered to a consumer such as a wrapped 6 unit pack of beverage bottles.

The term "secondary packaging" refers to polymer films that are placed around a plurality of primary packages to provide a consolidated grouping of primary packages to ease handling, transport, and storage as well as offer protection of the primary packages during handling, transport, and storage.

Unless otherwise indicated, the disclosure of any ranges in the specification and claims are to be understood as including the range itself and also anything subsumed therein, as well as endpoints.

Referring to FIG. 1, embodiments of the instantly disclosed heat-shrinkable films **10** include a polymer film **20** and a coating **30** on an outer surface of the polymer film **20.** Specific embodiments of the present application will now be described. The disclosure may, however, be embodied in different forms and should not be construed as limited to the embodiments set forth in this disclosure. Rather, these embodiments are provided so that this disclosure will be thorough and complete, and will fully convey the scope of the subject matter to those skilled in the art.

With reference to FIG. 1, in one or more embodiments, the heat-shrinkable film **10** the polymer film **20** may be a monolayer film or a multilayer film. The monolayer film comprises an ethylene-based polymer. The multilayer film may comprise a first layer, a second layer, and at least one inner layer between the first layer and the second layer. As indicated for multilayer structures, the multilayer film may be formed as a three layer structure having a core layer B, and two external layers A and C arranged as A/B/C. External layers A and C may be the same or different. In alternative embodiments, the multilayer film may be formed as a structure having two core layers B and C and two external layers A and D arranged as A/B/C/D. It will be appreciated that the multilayer structure of embodiments of the multilayer film provides innumerable possibilities such as A/B/A, A/B/C/A, and A/B/C/B/D with the present disclosure contemplating each possibility.

The first layer of the multilayer film comprises from 30 to 100 percent by weight (wt.%) of a first ethylene-based polymer having a density from 0.905 to 0.930 grams per cubic centimeter (g/cm³), a melt index (I₂), measured according to ASTM D 1238 at 190°C and 2.16 kg load, of 0.1 to 2.0 grams per 10 minutes (g/10 min), and a peak melting point of less than 126°C as measured according to Differential Scanning Calorimetry (DSC). All individual values and subranges from 30 to 100 wt.% are included herein and disclosed herein; for example the amount of the first ethylene-based polymer with the delineated characteristics can be from a lower limit of 30, 40, or 50 wt.% to an upper limit of 70, 80, 90, or 100 wt.%. For example, the amount of the first ethylene-based polymer can be from 30 to 80 wt.%, or in the alternative, from 40 to 90 wt.%, or in the alternative, from 35 to 55 wt.%, or in the alternative from 62 to 87 wt.%.

As indicated, the first ethylene-based polymer may have a density from 0.905 to 0.930 g/cm³. All individual values and subranges from 0.905 to 0.930 g/cm³ are included herein and disclosed herein; for example, the density of the first ethylene-based polymer can be from an upper limit of 0.928, 0.925, 0.920 or 0.915 g/cm³ and a lower limit of 0.910, 0.915, 0.920, or 0.925 g/cm³.

As indicated, the first ethylene-based polymer may have a melt index (I₂), measured according to ASTM D 1238 at 190°C and 2.16 kg load, 0.1 to 2.0 g/10 min. All individual values and subranges from 0.1 to 2.0 g/10 min are included herein and disclosed herein; for example, the melt index of the first ethylene-based polymer can be from an upper limit of 2.0, 1.7, 1.4, 1.1, or 0.9 g/10 minutes and a lower limit of 0.1, 0.2, 0.3, 0.4, 0.6, or 0.8 g/10 min.

The first ethylene-based polymer may have a peak melting point of less than 126°C. For example, in some embodiments, the first ethylene-based polymer may have a peak melting point of 125°C or less, 120°C or less, 118°C or less, or 115°C or less in various further embodiments. Additionally, the first ethylene-based polymer may have a peak melting point of greater than 95°C, greater than 100°C, or greater than 105°C in various embodiments.

Examples of the first ethylene-based polymer may include those commercially available from the Dow Chemical Company, Midland, MI including, for example, DOW^{™} LDPE 1321, DOWLEX^{™} NG 2045B, and ELITE^{™} 5111G.

The second layer comprises from 50 to 100 wt.% of a second ethylene-based polymer having a density from 0.905 to 0.970 g/cm³ and a peak melting point in the range of 100°C to 135°C, as measured using DSC. All individual values and subranges from 50 to 100 wt.% are included herein and disclosed herein; for example, the amount of the second ethylene-based polymer with the delineated characteristics can be from a lower limit of 50, 60, or 70 wt.% to an upper limit of 80, 90, or 100 wt.%. For example, the amount of the second ethylene-based polymer can be from 50 to 80 wt.%, or in the alternative, from 60 to 90 wt.%, or in the alternative, from 65 to 85 wt.%, or in the alternative from 62 to 87 wt.%.

As indicated, the second ethylene-based polymer may have a density from 0.905 to 0.970 g/cm³. All individual values and subranges from 0.905 to 0.970 g/cm³ are included herein and disclosed herein; for example, the density of the first ethylene-based polymer can be from an upper limit of 0.968, 0.960, 0.955 or 0.950 g/cm³ and a lower limit of 0.910, 0.915, 0.920, or 0.925 g/cm³.

The second ethylene-based polymer may have a peak melting point in the range of 100°C to 135°C, as measured by DSC. The second ethylene-based polymer may have a peak melting point upper limit of 135°C, 130°C, 125°C, or 120°C and a peak melting point lower limit of 100°C, 105°C, 110°C, or 115°C in various further embodiments.

The second ethylene-based polymer may be the same or different from the first ethylene-based polymer in one or more characteristics, such as, density, melt index, or peak melting point. Examples of the second ethylene-based polymer may include those commercially available from the Dow Chemical Company, Midland, MI, including, for example, DOW^{™} LDPE 1321, DOWLEX^{™} NG 2045B, UNIVAL^{™} DMDA 6200 NT7, and ELITE^{™} 5111G.

The at least one inner layer comprises from 10 to 50 wt.% of a third ethylene-based polymer having a density from 0.930 to 0.970 g/cm³ and a peak melting point in the range of 120° C to 135° C. All individual values and subranges from 10 to 50 wt.% are included herein and disclosed herein; for example the amount of the third ethylene-based polymer with the delineated characteristics can be from a lower limit of 10, 20, or 30 wt.% to an upper limit of 30, 40, or 50 wt.%. For example, the amount of the third ethylene-based polymer can be from 10 to 40 wt.%, or in the alternative, from 20 to 50 wt.%, or in the alternative, from 15 to 45 wt.%, or in the alternative from 22 to 47 wt.%.

The third ethylene-based polymer may have a density from 0.930 to 0.970 g/cm³. All individual values and subranges from 0.905 to 0.930 g/cm³ are included herein and disclosed herein; for example, the density of the third ethylene-based polymer can be from an upper limit of 0.968, 0.960, 0.955 or 0.950 g/cm³ and a lower limit of 0.930, 0.935, 0.940, or 0.950 g/cm³.

The third ethylene-based polymer may have a peak melting point in the range of 120°C to 135°C, as measured by DSC. The third ethylene-based polymer may have a peak melting point upper limit of 135°C, 132°C, 130°C, or 128°C and a peak melting point lower limit of 120°C, 122°C, 125°C, or 128°C in various embodiments.

The third ethylene-based polymer may be the same or different from the first and/or the second ethylene-based polymer in one or more characteristics, such as, density, melt index, or peak melting point. Examples of the third ethylene-based polymer may include those commercially available from the Dow Chemical Company, Midland, MI, including, for example, DOWLEX^{™} NG 2038B and UNIVAL^{™} DMDA 6200 NT7.

Having briefly described the scope and breadth of the multilayer film of the heat-shrinkable film, specific examples of multilayer film components and construction are provided. In one or more embodiments, the multilayer film comprises the first layer comprising from 30 to 100 wt.% of the first ethylene-based polymer, the second layer comprising from 50 to 100 wt.% of the second ethylene-based polymer, and the least one inner layer between the first layer and the second layer comprising from 10 to 50 wt.% of the third ethylene-based polymer.. The first ethylene-based polymer may have a density from 0.905 to 0.930 g/cm³, a melt index (I₂) of 0.1 to 2.0 g/10 min, and a peak melting point of less than 126°C. The second ethylene-based polymer may have a density from 0.905 to 0.970 g/cm³ and a peak melting point in the range of 100°C to 135°C. Finally, the third ethylene-based polymer may have a density from 0.930 to 0.970 g/cm³ and a peak melting point in the range of 120°C to 135°C.

In some embodiments, the multilayer film comprises the first layer comprising from 50 to 70 wt.% of the first ethylene-based polymer, the second layer comprising from 50 to 70 wt.% of the second ethylene-based polymer, and the least one inner layer between the first layer and the second layer comprising from 20 to 40 wt.% of the third ethylene-based polymer.. The first ethylene-based polymer and the second ethylene-based polymer may each have a melt index (I₂) of 0.1 to 0.4 g/10 min, and a peak melting point of less than 120°C. The third ethylene-based polymer may have a density from 0.930 to 0.970 g/cm³ and a peak melting point in the range of 120°C to 135°C.

In some embodiments, the multilayer film comprises the first layer comprising from 30 to 50 wt.% of the first ethylene-based polymer, the second layer comprising from 30 to 50 wt.% of the second ethylene-based polymer, and the least one inner layer between the first layer and the second layer comprising from 60 to 80 wt.% of the third ethylene-based polymer.. The first ethylene-based polymer and the second ethylene-based polymer may each have a melt index (I₂) of 0.4 to 1.0 g/10 min, and a peak melting point of less than 125°C. The third ethylene-based polymer may have a density from 0.910 to 0.930 g/cm³ and a peak melting point in the range of 120°C to 135°C.

In some embodiments, the multilayer film comprises the first layer comprising from 60 to 80 wt.% of the first ethylene-based polymer, the second layer comprising from 60 to 80 wt.% of the second ethylene-based polymer, and the least one inner layer between the first layer and the second layer comprising from 60 to 85 wt.% of the third ethylene-based polymer. The first ethylene-based polymer and the second ethylene-based polymer may each have a melt index (I₂) of 0.3 to 1.2 g/10 min, and a peak melting point in the range of 115°C to 135°C. The third ethylene-based polymer may have a density from 0.910 to 0.930 g/cm³ and a peak melting point in the range of 120°C to 135°C.

It will be appreciated that one or more of the first ethylene-based polymer, the second ethylene-based polymer, and the third ethylene-based polymer disposed in the first layer, the second layer, and the inner layer respectively may comprise the same underlying ethylene-based polymer. For example, the first layer and the second layer may each comprise one or more of the same polymers.

As noted above, in some embodiments, the ethylene-based polymer film 20 is a monolayer film. In such embodiments, monolayer film comprises from 30 to 60 wt.% of a fourth ethylene-based polymer having a density from 0.905 to 0.930 g/cm3, a melt index (I2), measured according to ASTM D 1238 at 190 °C and 2.16 kg, of 0.1 to 0.9 g/10 min, and a peak melting point of less than 126°C, as measured using DSC. All individual values and subranges from 30 to 60 wt.% are included herein and disclosed herein; for example the amount of the fourth ethylene-based polymer with the delineated characteristics can be from a lower limit of 30, 40, or 50 wt.% to an upper limit of 40, 50, or 60 wt.%. For example, the amount of the fourth ethylene-based polymer can be from 30 to 50 wt.%, or in the alternative, from 40 to 60 wt.%, or in the alternative, from 35 to 55 wt.%, or in the alternative from 42 to 57 wt.%.

As indicated, the fourth ethylene-based polymer may have a density from 0.905 to 0.930 g/cm³. All individual values and subranges from 0.905 to 0.930 g/cm³ are included herein and disclosed herein; for example, the density of the fourth ethylene-based polymer can be from an upper limit of 0.928, 0.925, 0.920 or 0.915 g/cm³ and a lower limit of 0.910, 0.915, 0.920, or 0.925 g/cm³.

As indicated, the fourth ethylene-based polymer may have a density a melt index (I₂) measured according to ASTM D 1238 at 190 °C and 2.16 kg of 0.1 to 0.9 g/10 min. All individual values and subranges from 0.1 to 2.0 g/10 min are included herein and disclosed herein; for example, the melt index of the fourth ethylene-based polymer can be from an upper limit of 0.9, 0.8, 0.7, or 0.6 g/10 minutes and a lower limit of 0.1, 0.2, 0.3, 0.4, 0.5, or 0.6 g/10 min.

The fourth ethylene-based polymer may have a peak melting point of less than 126°C, as measured using DSC. The fourth ethylene-based polymer may have a peak melting point of 125°C or less, 120°C or less, 115°C or less, or 110°C or less in various further embodiments. Additionally, the fourth ethylene-based polymer may have a peak melting point of greater than 95°C, greater than 100°C, or greater than 105°C in various embodiments.

It will be appreciated that one or more of the fourth ethylene-based polymer may be the same as one or more of the first ethylene-based polymer, the second ethylene-based polymer, and the third ethylene-based polymer forming the multilayer film.

In multilayer embodiments where the first layer comprises less than 100 wt.% of the first ethylene-based polymer, the first layer of the multilayer film may further comprise one or more additional ethylene-based polymers such as, one or more low density polyethylenes (LDPE) having a melt index from 0.1 to 5 g/10 min, one or more additional linear low density polyethylenes (LLDPE) having a density of 0.930 g/cm³ or less and a melt index from 0.1 to 5 g/10 min, or one or more high density polyethylenes (HDPE) having a density of 0.940 g/cm³ or greater and a melt index from 0.1 to 5 g/10 min. LDPE may be added to increase melt strength, which is beneficial for the extrusion process. LLDPE may be added to increase flexibility of the resulting film. HDPE may be added for increased strength of the resulting film and for its barrier properties. In one or more embodiments, the first layer may include up to 40 wt.% of a HDPE to increase the strength properties of the multilayer film. Additional ethylene-based polymers, which may comprise the remainder of the first layer of the multilayer film, include those commercially available from the Dow Chemical Company under the names AFFINITY^{™}, DOWLEX^{™}, UNIVAL^{™}, AGILITY^{™}, TUFLIN^{™}, ATTANE^{™}, INNATE^{™} and ELITE^{™} including, for example, UNIVAL^{™} DMDA 6200 NT7.

Moreover, in multilayer embodiments where the second layer of the multilayer film comprises less than 100 wt.% of the second ethylene-based polymer, the second layer further comprises one or more additional ethylene-based polymers such as, one or more low density polyethylenes (LDPE) having a melt index from 0.1 to 5 g/10 min, one or more additional linear low density polyethylenes (LLDPE) having a density of 0.930 g/cm³ or less and a melt index from 0.1 to 5 g/10 min, or one or more high density polyethylenes (HDPE) having a density of 0.940 g/cm³ or greater and a melt index from 0.1 to 5 g/10 min.. Additional ethylene-based polymers which may comprise the remainder of the second layer of the multilayer film include those commercially available from the Dow Chemical Company, Midland, MI under the names AFFINITY^{™}, DOWLEX^{™}, UNIVAL^{™}, AGILITY^{™}, TUFLIN^{™}, ATTANE^{™}, INNATE^{™}, and ELITE^{™}.

Furthermore, in multilayer embodiments where the inner layer comprises less than 100 wt.% of the third ethylene-based polymer, the inner layer of the multilayer film may further comprise one or more additional ethylene-based polymers such as, one or more low density polyethylenes (LDPE) having a melt index from 0.1 to 5 g/10 min, one or more additional linear low density polyethylenes (LLDPE) having a density of 0.930 g/cm³ or less and a melt index from 0.1 to 5 g/10 min, or one or more high density polyethylenes (HDPE) having a density of 0.940 g/cm³ or greater and a melt index from 0.1 to 5 g/10 min.. In one or more embodiments, the inner layer may include up to 70 wt.% of a LDPE to increase the melt strength properties of the multilayer film during extrusion. In one or more embodiments, the inner layer may include up to 30 wt.% of a LLDPE to increase flexibility the multilayer film. Additional ethylene-based polymers which may comprise the remainder of the inner layer of the multilayer film include those commercially available from the Dow Chemical Company under the names AFFINITY^{™}, DOWLEX^{™}, UNIVAL^{™}, AGILITY^{™}, TUFLIN^{™}, ATTANE^{™}, INNATE^{™}, and ELITE^{™} including, for example, DOW^{™} LDPE 1321 and DOWLEX^{™} NG 2045B.

In some embodiments, one or more layers of the multilayer film may comprise one or more additives. Additives can include, but are not limited to, antistatic agents, color enhancers, dyes, lubricants, fillers (for example,Ti02 or CaC0₃), opacifiers, nucleators, processing aids, pigments, primary anti-oxidants, secondary anti-oxidants, UV stabilizers, anti-blocks, slip agents, tackifiers, fire retardants, anti-microbial agents, odor reducer agents, anti-fungal agents, oxygen scavengers, moisture scavengers, and combinations thereof, depending on the requirements of a particular application.

Traditional shrink films are formulated such that they stick to themselves or other polymeric films upon exposure to heat. This phenomena is desirable when sealing a package. However, as previously discussed, shrink films may also be utilized to wrap multiple previously shrink wrapped saleable items into a single unit for each of transport and storage in the process of unitization. Sticking or adhesion between the films would be problematic as the saleable items would potentially be damaged resulting in loss or scrapping of product. To avoid this detrimental effect, the shrink films used for unitization may be formulated and manufactured to avoid sticking or adhesion.

The present invention provides an acrylic-based coating 30 on an outer surface of the heat-shrinkable film 10, either the monolayer film or the multilayer film. For the multilayer film, the outer surface is the outer surface of the first layer or the second layer. The coating is formed from an aqueous acrylic-based composition comprising from 30 to 90 wt.% (on a dry wt. basis), alternatively, from 40 wt.% to 90 wt.% or from 50 wt.% to 90 wt.% (on a dry weight basis), of an acrylic resin; from 0.01 to 2.0 wt.% (on a dry wt. basis), alternatively, from 0.05 to 2.0 wt.% or from 0.05 wt.% to 1.5 wt.% (on a dry wt. basis), of a polyvalent metal crosslinking agent; and from 0.1 to 6.0 wt.% (on a dry wt. basis), or alternatively, from 1.0 wt.% to 6.0 wt.% or from 2.0 wt.% to 6.0 wt.% (on a dry wt. basis), of a surface active agent.

As noted above, the coating comprises from 30 to 90 wt.% (on a dry wt. basis) of an acrylic resin. All individual values and subranges from 30 to 90 wt.% (on a dry wt. basis) are included herein and disclosed herein; for example the amount of the acrylic resin can be from a lower limit of 30, 40, or 50 wt.% (on a dry wt. basis) to an upper limit of 90, 80, or 70 wt.% (on a dry wt. basis). For example, in some embodiments, the amount of the acrylic resin can be from 40 to 90 wt.% (on a dry wt. basis), or in the alternative, from 50 to 90 wt.% (on a dry wt. basis), or in the alternative, from 50 to 80 wt.% (on a dry wt. basis).

The acrylic resin is a copolymer of (i) ethylenically unsaturated nonionic monomers such as, but not limited to, C1-C8 alkyl esters of acrylic or methacrylic acid; (ii) (meth)acrylonitrile; and (iii) ethylenically unsaturated acid monomers. In some embodiments, the acrylic resin is a copolymer of 40 to 90 wt.% (alternatively, 45 to 85 wt.%, 50 to 85 wt.%, or 55 to85 wt.%) of C1-C8 alkyl esters of acrylic or methacrylic acid, 9 to 50 wt.% (alternatively, 10 to 40 wt.%, 15 to 40 wt.%, or 20 to 40 wt.%) of the (meth)acrylonitrile, and 1 to 15 wt.% (alternatively, 1 to 10 wt.%, 1 to 7 wt.%, or 1 to 5 wt.%) of dicarboxylic acid. As used herein, (meth)acrylonitrile refers to acrylonitrile or methacrylonitrile.

Examples of ethylenically unsaturated nonionic monomers may include, (meth)acrylic ester monomers including methyl acrylate, ethyl acrylate, butyl acrylate,2-ethylhexyl acrylate, decyl acrylate, lauryl acrylate, ethyl methacrylate, methyl methacrylate, butyl methacrylate, isodecyl methacrylate, lauryl methacrylate, hydroxyethyl methacrylate, hydroxypropyl methacrylate, styrene, substituted styrenes, ethylene, butadiene; vinyl acetate, vinyl butyrate and other vinyl esters: vinyl monomers such as vinyl chloride, vinyl toluene, and vinyl benzophenone; and vinylidene chloride and thereof In some embodiments, the ethylenically unsaturated nonionic monomers is a C1-C8 alkyl esters of acrylic or methacrylic acid. In other embodiments, the C1-C8 alkyl esters of acrylic or methacrylic acid is ethyl (meth)acrylate.

Examples of suitable ethylenically unsaturated acid monomers include, for example, dicarboxylic acids, acrylic acid, methacrylic acid, crotonic acid, itaconic acid, fumaric acid, maleic acid, monomethyl itaconate, monomethyl fumarate, monobutyl fumarate, maleic anhydride, 2-acrylamido-2-methylpropane Sulfonic acid, vinyl Sulfonic acid, styrene Sulfonic acid, 1-allyloxy-2-hydroxypropane Sulfonic acid, alkyl allyl Sulfo Succinic acid, Sulfoethyl (meth)acrylate, phosphoalkyl (methacrylates such as phosphoethyl(meth)acrylate, phosphopropyl (meth)acrylate, and phosphobutyl (meth)acrylate, phosphoalkyl crotonates, phosphoalkyl maleates, phosphoalkyl fumarates, phosphodialkyl (meth)acrylates, phosphodialkyl crotonates, and allyl phosphate and thereof. In some embodiments, the ethylenically unsaturated acid mono is a dicarboxylic acid. In other embodiments, dicarboxylic acid is an α,β-ethylenically unsaturated dicarboxylic acid. In other embodiments, the dicarboxylic acid is selected from the group consisting of maleic acid, fumaric acid, itaconic acid, maleic anhydride, fumaric anhydride, itaconic anhydride, monomethyl maleate, monomethyl itaconate, monomethyl fumarate, monobutyl fumarate, or combinations thereof. In further embodiments, the dicarboxylic acid is maleic acid, fumaric acid, or itaconic acid.

Examples of suitable polyvalent metal crosslinking agents include polyvalent metal complexes or polyvalent metal chelates, which is at least partially ionizable or soluble in the system. In some embodiments, the polyvalent metal is a transition metal. In other embodiments, the polyvalent metal is selected from group II-B or IV-B of the periodic table. In further embodiments, the polyvalent metal is zinc, cadmium, or zirconium. The selection of polyvalent metal and the anion are governed by the solubility of the resultant metal complex or compound in the liquid medium used.

Specific examples of polyvalent metal crosslinking agents include, but are not limited to, magnesium aluminometasilicate, zirconium alaninate, zinc alaninate, zinc ammonium glycinate or titanium compounds, tetraethyl titanate, tetraisopropyl titanate, aluminum isopropylate or aluminum sec-butryrate, and dipropoxybis(acetylacetonato)titanium, tetraoctylene glycol titanate, aluminum isopropylate, aluminum ethylacetoacetate diisopropylate, aluminum tris(ethylacetoacetate) or aluminum tris(acetylacetonate)), zinc acetate, cadmium acetate, zinc glycinate, cadmium glycinate, zirconium carbonate, zinc carbonate, cadmium carbonate, zinc benzoate, zinc salicylate, zinc glycolate and cadmium glycolate.

Surface active agents useful herein include, but are not limited to, anionic surface active agents, cationic surface active agents, zwitterionic surface active agents, non-ionic surface active agents, and mixtures thereof. Non-limiting examples of useful surface active agents include N-alkyl sulfosuccinamate, dialkyl sulfosuccinates, alkyl sulfates and sulfonates, alkyl polyalkylene oxidesulfates, alkyl aryl polyalkylene oxidesulfates, alkyl aryl sulfonates, alkyl polyalkylene oxides, alkyl aryl polyalkyleneoxides, or combinations thereof.

The aqueous acrylic-based composition further comprises a fluid medium. The fluid medium may be any medium; for example, the fluid medium may be water; or in the alternative, the fluid medium may be a mixture of water and one or more organic solvents, e.g. one or more water miscible solvents or one or more water immiscible solvents, or combinations thereof. In embodiments herein, the aqueous acrylic-based composition comprises 15 to 99 percent by volume of water, based on the total volume of the dispersion. In particular embodiments, the water content may be in the range of from 30 to 75, or in the alternative from 35 to 65, or in the alternative from 40 to 65 percent by volume, based on the total volume of the dispersion. Water content of the dispersion may preferably be controlled so that the solids content is between about 1 percent to about 99 percent by volume. In particular embodiments, the solids range may be between about 15 percent and about 45 percent. In other particular embodiments, the solids range may be between 25 percent to about 70 percent by volume. In other particular embodiments, the solids range is between about 30 percent to about 45 percent by volume. In certain other embodiments, the solids range is between about 35 percent to about 60 percent by volume.

The aqueous acrylic-based composition may be formed by first polymerization of one or more acrylic resin monomers in an aqueous medium to form the acrylic polymer dispersion. Exemplary polymerization techniques include solution, emulsion, mini-emulsion, micro emulsion, or suspension polymerization processes. The practice of emulsion polymerization is discussed in detail in D.C. Blackley, Emulsion Polymerization (Wiley, 1975) and H. Warson, The Applications of Synthetic Resin Emulsions, Chapter 2 (Ernest Benn Ltd., London 1972). The polymer dispersion is neutralized, and post-neutralization, the surface active agent and the metal crosslinking agent may be added to form the aqueous acrylic-based composition.

During the preparation of the aqueous acrylic-based composition, optionally one or more fillers; optionally one or more additives, such as, catalysts, wetting agents, defoamers, flow agents, release agents, slip agents, anti-blocking agents, additives to mask sulfur staining, pigment wetting/dispersion agents, anti-settling agents, UV stabilizers, adhesion promoters; optionally one or more lubricants such as fatty acid ester wax, silicon-based wax, fluorine-based wax, polyethylene or any other similar polyolefin wax, carnauba wax, lanolin wax or the like; optionally one or more corrosion inhibitors such as aluminum, and zinc: optionally one or more pigments, e.g. titanium dioxide, mica, calcium carbonate, barium sulfate, silica, zinc oxide, milled glass, aluminum trihydrate, talc, antimony trioxide, fly ash, and clay or the like; optionally one or more dyes; optionally one or more co-solvents, e.g. glycols, glycol ether, 2,2,4-trimethyl-1,3-pentanediol monoisobutyrate, alcohols, mineral spirits, and benzoate esters or the like; optionally one or more dispersants, e.g. aminoalcohols, and polycarboxylates; optionally one or more surfactants; optionally one or more defoamers; optionally one or more preservatives, e.g. biocides, mildewcides, fungicides, algaecides, and combinations thereof; optionally one or more thickeners, e.g. cellulosic based thickeners such as hydroxyethyl cellulose, hydrophobically modified alkali soluble emulsions (HASE thickeners such as UCAR POLYPHOBE TR-116) and hydrophobically modified ethoxylated urethane thickeners (HEUR); or optionally one or more additional neutralizing agents, e.g. hydroxides, amines, ammonia, and carbonates may be added to the aqueous dispersion formulation; or in the alternative, may be added to the aqueous acrylic-based composition post-emulsion polymerization process.

Referring to FIG. 1, the coating **30** can be applied to the outer surface of the polymer film **20** using a variety of techniques by which coatings are typically applied to films including, but not limited to, for example, gravure coating and flexographic coating. Other thin coating techniques may also be used. Persons of skill in the art with equipment to apply aqueous-based coatings and adhesives can readily adapt their process to apply an aqueous acrylic-based composition coating to the polymer film **20** to obtain the coated heat-shrinkable films **10** of the present disclosure.

The amount of coating **30** applied to the polymer film **20,** in some embodiments, can be at least 0.1 gram per square meter. As used herein, the amount of coating is determined by measuring the difference of the weight of the ethylene-based polymer layer **20** before coating and after the coating **30** is applied and dried. In some embodiments, the amount of coating **30** applied to the ethylene-based polymer layer **20** is up to 5 grams per square meter. It will be appreciated that the coating **30** has no maximum coating thickness and is simply limited by the economics of avoiding an unnecessarily thick and costly coating beyond that required to provide the desired coating properties and performance. The amount of coating **30** applied to the film, in some embodiments, is 0.1 to 0.8 grams per square meter (g/m²). All individual values and subranges from 0.1 to 5 g/m² are included herein and disclosed herein; for example, the amount of coating may be from a lower limit of 0.1, 0.2, 0.3, 0.4, 0.5, or 0.6 g/m² to an upper limit of 0.7, 0.8, 0.9, 1, 3, or 5 g/m². For example, the amount of coating **30** can be from 0.3 to 0.8 g/m² in some embodiments.

In one or more embodiments, the coating **30** is applied in accordance with a defined pattern of coated and uncoated regions on the outer surface of the polymer film **20.** As the coated heat-shrinkable films **10** is generally provided as a rolled film, the uncoated regions are positioned in alignment with a seal area when the coated heat-shrinkable films **10** is utilized as a wrap around an object. The absence of coating **30** in the uncoated regions allows the coated heat-shrinkable films **10** to seal or adhere to itself when wrapping an object with the coating **30** retaining the benefit of eliminating adhesion in alignment with the coated regions. With a multilayer film, the coating **30** is applied in accordance with a defined pattern of coated and uncoated regions on the outer surface of the first layer or second layer of the multilayer film. Similarly, with a monolayer film, the coating **30** is applied in accordance with a defined pattern of coated and uncoated regions on the outer surface of the monolayer film.

Embodiments of the present disclosure also provide articles formed from any of the heat-shrinkable films **10** described herein. Examples of such articles can include secondary packaging for grouping several products together in order to ease handling, transport, and storage of the unitized grouping of products.

With reference to FIG 1, application of the heat-shrinkable films **10** as an over shrink film to unitize multiple primary packages **60** is shown. Each primary package **60** is shown as comprising multiple individual items **62** with a primary packaging film **64** bundling the individual items **62** into the saleable primary packages **60.** The primary packaging film **64** may be a polymeric film. The heat-shrinkable films **10** are then utilized as a secondary packaging film to bundle multiple primary packages **60** into a larger parcel for ease of handling, transport, and storage as well as providing protection to the primary packages **60** throughout the logistics chain. The aqueous acrylic-based composition used to form the coating **30** acts as an intermediate functional layer between the primary packaging film **64** of the primary package **60** and the ethylene-based polymer layer(s) **20** of the heat-shrinkable film **10** to substantially reduce or fully prevent adhesion between them. The adhesion prevention helps to maintain the integrity of the primary packaging film **64.**

Methods of unitizing the polymer wrapped primary packages **60** include wrapping one or more of the primary packages **60** with the heat-shrinkable films **10** of this disclosure and applying thermal energy to reduce the dimensions of the heat-shrinkable film **10** to constrain the primary packages **60** within the heat-shrinkable film **10.** The coating **30** comprising aqueous acrylic-based is disposed proximal the one or more primary packages **60** during wrapping such that the polymeric film **64** bundling the individual products **62** of the primary packages is exposed to the coating **30** and is sequestered from the underlying ethylene-based polymer layer(s) **20.**

It will be appreciated that the primary packages **60** may comprise various types of individual products **62** therein. While FIG. 1 illustrate plastic bottles as the individual products **62,** further non-limiting examples include food, such as, pet food or rice, glass bottles, home goods, or other products which are typically unitized into consolidated bundles during supply chain operations.

In various embodiments, the heat-shrinkable film **10** may be heated to at least about 120°C, at least about 140°C, at least about 150°C, at least about 180°C, or even greater than 250°C to initiate contraction of the heat-shrinkable film **10** around one or more of the primary packages **60.** In embodiments, the heat-shrinkable film **10** may be heated to a temperature in the range of from about 140°C to about 190°C or from about 150°C to about 180°C to initiate contraction of the heat-shrinkable film **10** around one or more of the primary packages **60.** The heating hold time may be from about 1 seconds to about 1 minute, from about 2 seconds to about 30 seconds, or from about 3 seconds to about 20 seconds.

The thickness of the heat-shrinkable film **10** utilized for unitization of multiple primary packages **60** of wrapped individual products **62** into a single grouping as a secondary packaging can be selected depending on a number of factors including, for example, the size of the primary packages **60,** the volume of the primary packages **60,** the weight of the primary packages **60** and individual products **62,** the contents of the primary packages **60,** the desired properties of the secondary packaging, and other factors. In some such embodiments, the heat-shrinkable film **10** has a thickness of 20 to 500 µm (microns). All individual values and subranges from 20 to 500 µm (microns) are included herein and disclosed herein; for example, the thickness of the heat-shrinkable film **10** may be from a lower limit of 20, 30, 40, 50, 60, 70, 80, 90, 100, 110, 120, 130, 140, 150, 160, 170, 180, or 190 µm (microns) to an upper limit of 30, 40, 50, 60, 70, 80, 90, 100, 110, 120, 130, 140, 150, 160, 170, 180, 190, 200, 220, 250, 280, 300, 330, 350, 370, 400, 430, 450, 470, or 500 µm (microns). It is noted that 25.4 µm (microns) is the equivalent of 1 mil of thickness providing a disclosed range of approximately 25.4 µm to 508 µm (1 to 20 mils) for the thickness of the heat-shrinkable film.

### Test Methods

Unless otherwise indicated herein, the following analytical methods are used in the describing aspects of the present invention:

### Melt Index

Melt Index, I₂, is measured in accordance to ASTM D-1238 at 190°C and at 2.16 kg. The values are reported in g/10 min.

### Density

Samples for density measurement are prepared according to ASTM D4703. Measurements are made, according to ASTM D792, Method B, within one hour of sample pressing.

### Peak Melting Point

Differential Scanning Calorimetry (DSC) can be used to measure the melting and crystallization behavior of a polymer over a wide range of temperature. For example, the TA Instruments Q1000 DSC, equipped with an RCS (refrigerated cooling system) and an autosampler is used to perform this analysis. During testing, a nitrogen purge gas flow of 50 ml/min is used. Each sample in pellet shape is melt pressed into a thin film at about 150°C.; the melted sample is then air-cooled to room temperature (about 25 °C). A 5-10 mg, 6 mm diameter specimen is extracted from the cooled polymer, weighed, placed in a light aluminum pan (about 50 mg), and crimped shut. Analysis is then performed to determine its thermal properties.

The thermal behavior of the sample is determined by ramping the sample temperature up and down to create a heat flow versus temperature profile. First, the sample is rapidly heated to 180°C and held isothermal for 3 minutes in order to remove its thermal history. Next, the sample is cooled to -40°C at a 10°C /minute cooling rate and held isothermal at -40 °C for 3 minutes. The sample is then heated to 150°C (this is the "second heat" ramp) at a 10°C/minute heating rate. The cooling and second heating curves are recorded. The second heat curve is analyzed by setting baseline endpoints from -30°C to 135°C. The value determined is peak melting temperature (Tm), also known as the melting point. The peak melting temperature is reported from the second heat curve. If multiple peaks are observed, the peak with the highest temperature is used to determine Tm.

### Dart

The film Dart Drop test determines the energy that causes a plastic film to fail, under specified conditions of impact by a free falling dart. The test result is the energy, expressed in terms of the weight of the missile falling from a specified height, which would result in the failure of 50% of the specimens tested.

Dart Impact Strength (dart) is measured according to ASTM D1709, Method A, using a 66 cm ± 1 cm (26 inch ± 0.4 inches) drop height and a polished aluminum hemispherical head of 38.10 ± 0.13 mm in diameter.

### Secant Modulus

The MD (Machine Direction) and CD (Cross Direction) 2% Secant Modulus was determined per ASTM D882 at a crosshead speed of 50.8 cm (20 inch)/minute. The width of the specimen is 2.54 cm (1 inch) and initial grip separation is 10.16 cm (4 inches). The reported 2% Secant Modulus value was the average of five measurements.

### Tear Test

Elmendorf tear testing in both the machine direction (MD) and cross direction (CD) was done in accordance with ASTM D1922, type B - constant radius.

### Puncture Resistance

Puncture resistance is measured on a ZWICK model Z010 with TestXpertII software. The specimen size is 15.24 cm × 15.24 cm (6" × 6") and at least 5 measurements are made to determine an average puncture value. A 1000 Newton load cell is used with a round specimen holder. The specimen is a 10.16 cm (4 inch) diameter circular specimen. The Puncture resistance procedures follow ASTM D5748-95 standard, with modification to the probe described here. The puncture probe is a 1.27 cm (½ inch) diameter ball shaped polished stainless steel probe. There is no gauge length; the probe is as close as possible to, but not touching, the specimen. The probe is set by raising the probe until it touched the specimen. Then the probe is gradually lowered, until it is not touching the specimen. Then the crosshead is set at zero. Considering the maximum travel distance, the distance would be approximately 0.254 cm (0.10 inch). The crosshead speed used is 250 mm/minute. The thickness is measured in the middle of the specimen. The thickness of the film, the distance the crosshead traveled, and the peak load are used to determine the puncture by the software. The puncture probe is cleaned after each specimen. The puncture energy is the area under the curve of the load/elongation curve (in Joules).

### Young's Modulus

The MD (Machine Direction) and CD (Cross Direction) Young's Modulus, or Modulus of Elasticity, is obtained in the same apparatus as Secant Modulus, which is determined per ASTM D882. The width of the specimen is 2.54 cm (1 inch) and initial grip separation is 10.16 cm (4 inches) at a crosshead speed of 50.8 cm (20 inch)/minute. The reported Young's Modulus value was the average of five measurements. Young Modulus is the slope of the straight line portion of a stress-strain diagram.

### Free Shrinkage

Unrestrained linear thermal shrinkage of plastic film and sheeting is measured in accordance with a Dow Internal Method based on ASTM D 2732-70. 5 specimens of 50 mm of diameter are prepared and conditioned at 23 ± 2 °C and 50 ± 5% relative humidity for 40 h prior to test. The test is held in a HANATEK Mod 2010. When test temperature of 150°C is reached and stabilized, a few drops of silicon oil are added to the copper disc. As the oil spreads and stabilizes at the given temperature, samples are carefully placed as flat as possible in the hot-plate for 20 s. Then, samples are removed from the carrier disc and placed the cooling area, centralized so that shrinkage percentage can be read off.

The percentage of free shrinkage is given by: % = [(*L*₀ - *L_{f}*)/*L*₀] × 100, where L₀ = initial length of side and Lf = length after shrinking. The free shrinkage value is calculated in the MD (Machine Direction) and the CD (Cross Direction) and is the average of five respective measurements.

### Heat Seal Test

Heat seal measurements on the film are performed on a commercial tensile testing machine according to ASTM F-88 (Technique A). The heat seal test is a gauge of the strength of seals (seal strength) in flexible barrier materials. It does this by measuring the force required to separate a test strip of material containing the seal and identifies the mode of specimen failure. Seal strength is relevant to the opening force and package integrity. Prior to cutting, the films are conditioned for a minimum of 40 hours at 23°C (+ 2°C) and 50% (+ 5%) R.H. (relative humidity) per ASTM D-618 (procedure A). Sheets are then cut from the three-layer coextruded laminated film in the machine direction to a length of approximately 11 inches and a width of approximately 8.5 inches. The sheets are heat sealed across the machine direction on a Brugger HSG-C sealer over a range of temperatures under the following conditions: Sealing Pressure, or dwell force: 0.138 N/mm² (20 psi) and dwell times of 0.3s and 0.5 s. Heat seal force is reported in grams force per square inch (grf/in²).

Some embodiments of the invention will now be described in detail in the following Examples.

### Examples

### Preparation of Monolayer Film

An ethylene-based polymer heat-shrinkable monolayer film was produced via blown film extrusion as Comparative Film 1. The Comparative Film 1 was prepared in accordance with a standard formulation presently utilized for marketable ethylene-based polymer heat-shrinkable films. The formulation is provided below as Table 1 with the properties of the individual resins provided as Table 2. The Comparative Film 1 was produced on a Collin Blown Film line with a blow up ratio (B.U.R.) of 3.0, a die diameter of 80 mm, a die gap of 1.8 mm, and subjected to 40 dynes of corona treatment. Further, the Comparative Film 1 was prepared with the following processing conditions: a melt temperature of 219 °C, a die temperature of 235 °C, a RPM of 59 rpm, an output of 22.42 kg/hr, a pressure of 25.8 MPa (258 bar), and a layflat of 377 mm. Also the film was prepared at using a temperature profile of 190 °C/210°C/220°C/235°C/235°C/235°C/235°C.

**Table 1 - Comparative Film 1 Formulation**

| **Description** | **Film thickness (µm)** | **Formulation** |
|---|---|---|
| Comparative Film 1 | 80 | 50% DOW^{™} LDPE 1321 |
| | | 30% DOWLEX^{™} 2045.11B |
| | | 20% DOWLEX^{™} 2050B |

**Table 2 - Selected Resin Properties**

| **Resin** | **Density (g/cm³)** | **Melt Index, I2 (g/10min)** | **Peak Melting Point (°C)** |
|---|---|---|---|
| DOW^{™} LDPE 1321 | 0.921 | 0.25 | 110 |
| DOWLEX^{™} 2045.11B | 0.921 | 1.0 | 122 |
| DOWLEX^{™} 2050B | 0.950 | 0.95 | 130 |

The Comparative Film 1 was coated with 0.5 g/m² of PRIMAL^{™} R-225 available from The Dow Chemical Company, Midland, MI with a Labo Combi 400 lamination machine operating at (30.48 m/min (100 ft/min)). PRIMAL^{™} R-225 is an aqueous acrylic-based composition in accordance with the present disclosure. The produced heat-shrinkable film coated with PRIMAL^{™} R-225 was designated as Inventive Film 2. The layer structure and formulation is provided in Table 3.

**Table 3 - Inventive Film 2 Formulation**

| **Description** | **Formulation** | |
|---|---|---|
| Inventive Film 2 | A | 50% DOW^{™} LDPE 1321 |
| | | 30% DOWLEX^{™} 2045.11B |
| | | 20% DOWLEX^{™} 2050B |
| | B | PRIMAL^{™} R-225 |

### Performance Testing of Monolayer Film

Comparative testing of Comparative Film 1 and Inventive Film 2 was completed to evaluate shrink over shrink film stickiness for primary packages. Specifically, each of Comparative Film 1 and Inventive Film 2 were used to bundle six different types of primary packages. The description of each type of primary package is provided in Table 4. The primary packages were bundled with each of Comparative Film 1 and Inventive Film 2 individually and passed through a Smipack BP shrink tunnel running at 2 m/min and 180 °C. Passage at 2 m/min and 180 °C is within the typical temperature range used in shrink tunnels for packaging lines.

**Table 4 - Primary packages for Study**

| **Primary package Identifier** | **Description** | **Composition** |
|---|---|---|
| Package 1 | Transparent polyethylene (PE) shrink package | Transparent PE collation shrink film bundling water bottles |
| Package 2 | Printed polyethylene shrink package | Printed PE collation shrink film bundling beverage bottles |
| Package 3 | Polyethylene pillow pouch | Printed PE pillow pouch for rice |
| Package 4 | Pet food bags with polyethylene terephthalate (PET) at external layer | Laminated PET/PE pet food packaging |
| Package 5 | Transparent polypropylene (PP) shrink package | Transparent PP/PE/PP coextruded collation shrink film for beverage cans |
| Package 6 | Biaxially oriented polypropylene (BOPP) bags | Printed BOPP bag for pasta |

The unitized bundling of the six package types were tested for adhesion between the internal packaging and the over shrink film of Comparative Film 1 and Inventive Film 2. Testing was completed by removing the over shrink film from the bundled packages and checking for fusion or stickiness to the primary package and damage to the primary package from removal of Comparative Film 1 and Inventive Film 2. The adhesion results are provided in Table 5 and Table 6.

**Table 5 - Adhesion Results for Comparative Film 1**

| **Comparative Film 1 over Primary package** | **Stickiness Observations after Shrinkage at 180 °C** |
|---|---|
| Package 1 | Stickiness - damaged primary package |
| Package 2 | Stickiness - damaged primary package |
| Package 3 | Stickiness - damaged primary package |
| Package 4 | Stickiness at packaging edges |
| Package 5 | No stickiness |
| Package 6 | Adhesion to BOPP surface - damaged primary package |

As indicated in Table 5, all primary packages were damaged by usage of Comparative Film 1 except for package 5. Specifically, Comparative Film 1 presented adhesion to the primary packages formulated with PE. That is packages 1, 2, and 3 were damaged from adhesion to the over shrink film of Comparative Film 1 and thus would be disabled from display on a shelf in a retail setting. With respect to package 4, the Comparative Film 1 did not specifically stick to the outer surface of the pet food bags which comprised PET, but did stick to the edges where the core layer of PE was exposed. As expected, as package 5 is composed of PP/PE/PP, Comparative Film 1 did not stick to the internal packaging. Finally, the Comparative Film 1 exhibited some adhesion to package 6 requiring force to separate and damaging the appearance of the primary packages. Evidence of the adhesion after shrinkage was left on both the removed Comparative Film 1 surface and the surface of package 6.

**Table 6 - Adhesion Results for Inventive Film 2**

| **Inventive Film 2 over Primary package** | **Stickiness Observations after Shrinkage at 180 °C** |
|---|---|
| Package 1 | No stickiness |
| Package 2 | No stickiness |
| Package 3 | No stickiness |
| Package 4 | No stickiness |
| Package 5 | No stickiness |
| Package 6 | No stickiness |

Inventive Film 2 did not stick to any of the primary packages after passing through the shrink tunnel. The six primary packages were each tightly wrapped and bundled by the Inventive Film 2 and the primary packages had their integrity maintained upon removal of the Inventive Film 2 without any damage.

Retention of mechanical and shrinkage properties of Comparative Film 1 upon application of the PRIMAL^{™} R-225 aqueous acrylic-based coating to generate Inventive Film 2 was measured. Retention of mechanical and shrinkage properties is desired to achieve sufficient shrinkage and packaging robustness to constrain individual packages to be unitized during the entire distribution chain. The mechanical and shrinkage properties of Comparative Film 1 and Inventive Film 2 are provided in Table 7. Multiple properties were evaluated including dart drop resistance; Elmendorf tear evaluation in the cross direction (CD) and machine direction (MD); protrusion puncture resistance evaluation; secant modulus 2%; Young's modulus; and shrinkage at 150°C in cross direction (CD) and machine direction (MD).

**Table 7 - Mechanical and Free Shrinkage Properties of Example Films**

| | **Comparative Film 1** | **Inventive Film 2** |
|---|---|---|
| **Dart Drop (Method A) (g)** | 184 | 323 |
| **Elmendorf MD (g)** | 336 | 368 |
| **Elmendorf CD (g)** | 1113 | 991 |
| **Puncture Energy (J)** | 4.60 | 5.61 |
| **Puncture Resistance (J/cm³)** | 6.84 | 9.17 |
| **Secant Modulus 2% MD (MPa)** | 270 | 270 |
| **Secant Modulus 2% CD (MPa)** | 282 | 269 |
| **Young Modulus MD (MPa)** | 418 | 434 |
| **Young Modulus CD (MPa)** | 475 | 455 |
| **Free Shrinkage at 150 °C MD (%)** | 57.5 | 47.5 |
| **Free Shrinkage at 150 °C CD (%)** | 20 | 20 |

The Inventive Film 2 substantially retained the mechanical and shrinkage properties of the uncoated film of Comparative Film 1 and provides a film suitable for secondary packaging and unitization.

### Preparation of Multilayer Films

Two ethylene-based polymer heat-shrinkable multilayer films were produced via blown film extrusion. The formulations for each prepared multilayer film are provided below as Table 8 with the properties of the individual resins provided as Table 9. A first multilayer film designated as Comparative Film 3 was prepared having the first layer and the second layer comprised of the same polymer formulation and the inner layer comprised of a second polymer formulation. A second multilayer film designated as Comparative Film 4 was also prepared having the first layer and the second layer comprised of the same polymer formulation and the inner layer comprised of a second polymer formulation. Comparative Film 3 and Comparative Film 4 were produced on a Collin Blown Film line with a blow up ratio (B.U.R.) of 3.0, a die diameter of 80 mm, a die gap of 1.8 mm, a die temperature of 230°C, a layflat of 377 mm, and treated with 40 dynes of corona. Layer A was prepared with the following processing conditions: a melt temperature of 219 °C, a RPM of 63 rpm, an output of 4.95 kg/hr, a pressure of 25.1 MPa (251 bar), and a temperature profile of 190°C/210°C/220°C/230°C/230°C/230°C. Layer B was prepared with the following processing conditions: a melt temperature of 215 °C, a RPM of 80 rpm, an output of 9.9 kg/hr, a pressure of 22.4 MPa (224 bar), and a temperature profile of 190°C/210°C/220°C/230°C/230°C/230°C. Layer C was prepared with the following processing conditions: a melt temperature of 214 °C, a RPM of 70 rpm, an output of 5.21 kg/hr, a pressure of 34.7 MPa (347 bar), and a temperature profile of 190 °C/210°C/220°C/230°C/230°C/230°C.

**Table 8 - Multilayer Film Formulations**

| **Description** | **Formulation** | |
|---|---|---|
| Comparative Film 3 A/B/C - 25/50/25 | A | 60% DOW^{™} LDPE 1321 |
| | | 40% ELITE^{™} 5111G |
| | B | 70% DOW^{™} LDPE 1321 |
| | | 30% DOWLEX^{™} NG 2038B |
| | C | 60% DOW^{™} LDPE 1321 |
| | | 40% ELITE^{™} 5111G |
| Comparative Film 4 A/B/C - 25/50/25 | A | 80% DOWLEX^{™} NG 2045B |
| | | 20% DOW^{™} LDPE 1321 |
| | B | 60% UNIVAL^{™} DMDA 6200 NT7 |
| | | 40% DOWLEX^{™} NG 2045B |
| | C | 80% DOWLEX^{™} NG 2045B |
| | | 20% DOW^{™} LDPE 1321 |

**Table 9 - Selected Resin Properties**

| **Resin** | **Density (g/cm³)** | **Melt Index, 12 (g/10min)** | **Peak Melting Point (°C)** |
|---|---|---|---|
| DOW^{™} LDPE 1321 | 0.921 | 0.25 | 110 |
| DOWLEX^{™} NG 2045B | 0.921 | 1.0 | 119 |
| DOWLEX^{™} 2038B | 0.935 | 1.0 | 126 |
| ELITE^{™} 5111G | 0.925 | 0.85 | 123 |
| UNIVAL^{™} DMDA 6200 NT7 | 0.953 | 0.38 | 131 |

Comparative Film 3 and Comparative Film 4 were coated with 0.3 g/m² and 0.5 g/m² of PRIMAL^{™} R-225 to generate an array of Inventive Films delineated in Table 10. Comparative Film 3 and Comparative Film 4 were also coated with 0.3 g/m², and 0.5 g/m² of PRIMAL^{™} GL 618, PRIMAL^{™} HA 8, and PRIMAL^{™} TR 407, available from The Dow Chemical Company (Midland, MI), to generate an array of comparative aqueous acrylic-based coated films as shown in Table 10. PRIMAL^{™} GL 618, PRIMAL^{™} HA 8, and PRIMAL^{™} TR 407 are acrylic-based coating compositions that are outside the scope of the claimed aqueous acrylic-based coating compositions described herein.

**Table 10 - Coated Multilayer Films**

| **Coated Film** | **Base Film** | **Coating** | **Coating Weight** |
|---|---|---|---|
| Inventive Film 5 | Comparative Film 3 | PRIMAL^{™} R-225 | 0.3 g/m² |
| Comparative Film 6 | | PRIMAL^{™} GL 618 | 0.3 g/m² |
| Comparative Film 7 | | PRIMAL^{™} HA 8 | 0.3 g/m² |
| Comparative Film 8 | | PRIMAL^{™} TR 407 | 0.3 g/m² |
| Inventive Film 9 | Comparative Film 3 | PRIMAL^{™} R-225 | 0.5 g/m² |
| Comparative Film 10 | | PRIMAL^{™} GL 618 | 0.5 g/m² |
| Comparative Film 11 | | PRIMAL^{™} HA 8 | 0.5 g/m² |
| Comparative Film 12 | | PRIMAL^{™} TR 407 | 0.5 g/m² |
| Inventive Film 13 | Comparative Film 4 | PRIMAL^{™} R-225 | 0.3 g/m² |
| Comparative Film 14 | | PRIMAL^{™} GL 618 | 0.3 g/m² |
| Comparative Film 15 | | PRIMAL^{™} HA 8 | 0.3 g/m² |
| Comparative Film 16 | | PRIMAL^{™} TR 407 | 0.3 g/m² |
| Inventive Film 17 | Comparative Film 4 | PRIMAL^{™} R-225 | 0.5 g/m² |
| Comparative Film 18 | | PRIMAL^{™} GL 618 | 0.5 g/m² |
| Comparative Film 19 | | PRIMAL^{™} HA 8 | 0.5 g/m² |
| Comparative Film 20 | | PRIMAL^{™} TR 407 | 0.5 g/m² |

### Performance Testing of Multilayer Films

To establish a comparison of the adhesion properties to an underlying package, the multilayer films (Films 5-20) were heat sealed to an uncoated multilayer film (Comparative Film 3) to simulate the contact of such external films wrapping around internal unitized packs and passage through a shrink tunnel. The results are provided in Table 11 through Table 14. Free shrinkage was also tested and results are provided in Table 15.

**Table 11 - Heat Seal Force - Uncoated Multilayer Film - Dwell Time: 0.3 s**

| **Representative Secondary Packaging** | **Representative Primary Package** | **Sealing Temperature:** | **150 °C** | **180 °C** |
|---|---|---|---|---|
| **Coating weight: No Coating** | | | | |
| Comparative Film 3 | Comparative Film 3 | **Heat** s**eal force** (grf/cm²) ((grf/in²)): | 2626 | 2831 |
| Comparative Film 4 | Comparative Film 3 | | 2804 | 2911 |

**Table 12 - Heat Seal Force - Coated Multilayer Films - Dwell Time: 0.3 s**

| **Coated Film** | **Base Film** | **Coating** | **Coating Weight** | **Heat seal force at 150 °C (grf/cm²) ((grf/in²⁾))** | **Heat seal force at 180 °C (grf/cm²) ((grf/in²))** |
|---|---|---|---|---|---|
| Inventive Film 5 | Comparative Film 3 | PRIMAL^{™} R-225 | 0.3 g/m² | 20.9 (135) | 33.9 (219) |
| Comparative Film 6 | | PRIMAL^{™} GL 618 | 0.3 g/m² | 69.8 (450) | 93.0 (600) |
| Comparative Film 7 | | PRIMAL^{™} HA 8 | 0.3 g/m² | 53.2 (343) | 106.0 (684) |
| Comparative Film 8 | | PRIMAL^{™} TR 407 | 0.3 g/m² | 28.4 (183) | 229.6 (1481) |
| Inventive Film 9 | Comparative Film 3 | PRIMAL^{™} R-225 | 0.5 g/m² | 11.8 (76) | 33.2 (214) |
| Comparative Film 10 | | PRIMAL^{™} GL 618 | 0.5 g/m² | 31.6 (204) | 58.1 (375) |
| Comparative Film 11 | | PRIMAL^{™} HA 8 | 0.5 g/m² | 30.8 (199) | 73.5 (474) |
| Comparative Film 12 | | PRIMAL^{™} TR 407 | 0.5 g/m² | 27.1 (175) | 92.1 (594) |
| Inventive Film 13 | Comparative Film 4 | PRIMAL^{™} R-225 | 0.3 g/m² | 19.5 (126) | 97.7 (630) |
| Comparative Film 14 | | PRIMAL^{™} GL 618 | 0.3 g/m² | 55.0 (355) | 102.9 (664) |
| Comparative Film 15 | | PRIMAL^{™} HA 8 | 0.3 g/m² | 62.5 (403) | 166.0 (1071) |
| Comparative Film 16 | | PRIMAL^{™} TR 407 | 0.3 g/m² | 30.5 (197) | 380.4 (2454) |
| Inventive Film 17 | Comparative Film 4 | PRIMAL^{™} R-225 | 0.5 g/m² | 24.6 (159) | 29.3 (189) |
| Comparative Film 18 | | PRIMAL^{™} GL 618 | 0.5 g/m² | 54.9 (354) | 116.4 (751) |
| Comparative Film 19 | | PRIMAL^{™} HA 8 | 0.5 g/m² | 27.1 (175) | 83.9 (541) |
| Comparative Film 20 | | PRIMAL^{™} TR 407 | 0.5 g/m² | 27.6 (178) | 122.8 (792) |

**Table 13 - Heat Seal Force - Uncoated Multilayer Film - Dwell Time: 0.5 s**

| **Uncoated Film 1** | **Uncoated Film 2** | **Sealing Temperature:** | **150 °C** | **180 °C** |
|---|---|---|---|---|
| **Coating weight: No Coating** | | | | |
| Comparative Film 3 | Comparative Film 3 | **Heat seal force** **(grf/cm²)** **((grf/in²)):** | 427.2 (2756) | 437.9 (2825) |
| Comparative Film 4 | Comparative Film 3 | | 442.8 (2857) | 456.5 (2945) |

**Table 14 - Heat Seal Force - Coated Multilayer Films - Dwell Time: 0.5 s**

| **Coated Film** | **Base Film** | **Coating** | **Coating Weight** | **Heat seal force at 150 °C (grf/cm²) ((grf/in²))** | **Heat seal force at 180 °C (grf/cm²) ((grf/in²))** |
|---|---|---|---|---|---|
| Inventive Film 5 | Comparative Film 3 | PRIMAL^{™} R-225 | 0.3 g/m² | 16.3 (105) | 32.6 (210) |
| Comparative Film 6 | | PRIMAL^{™} GL 618 | 0.3 g/m² | 201.0 (1297) | 427.6 (2759) |
| Comparative Film 7 | | PRIMAL^{™} HA 8 | 0.3 g/m² | 45.6 (294) | 146.9 (948) |
| Comparative Film 8 | | PRIMAL^{™} TR 407 | 0.3 g/m² | 21.7 (140) | 449.5 (2900) |
| Inventive Film 9 | Comparative Film 3 | PRIMAL^{™} R-225 | 0.5 g/m² | 8.2 (53) | 18.8 (121) |
| Comparative Film 10 | | PRIMAL^{™} GL 618 | 0.5 g/m² | 112.1 (723) | 226.5 (1461) |
| Comparative Film 11 | | PRIMAL^{™} HA 8 | 0.5 g/m² | 65.1 (420) | 118.6 (765) |
| Comparative Film 12 | | PRIMAL^{™} TR 407 | 0.5 g/m² | 22.0 (142) | 259.2 (1672) |
| Inventive Film 13 | Comparative Film 4 | PRIMAL^{™} R-225 | 0.3 g/m² | 39.5 (255) | 100.3 (647) |
| Comparative Film 14 | | PRIMAL^{™} GL 618 | 0.3 g/m² | 395.4 (2551) | 432.8 (2792) |
| Comparative Film 15 | | PRIMAL^{™} HA 8 | 0.3 g/m² | 27.1 (175) | 334.3 (2157) |
| Comparative Film 16 | | PRIMAL^{™} TR 407 | 0.3 g/m² | 68.5 (442) | 440.2 (2840) |
| Inventive Film 17 | Comparative Film 4 | PRIMAL^{™} R-225 | 0.5 g/m² | 10.4 (67) | 32.6 (210) |
| Comparative Film 18 | | PRIMAL^{™} GL 618 | 0.5 g/m² | 101.5 (655) | 280.9 (1812) |
| Comparative Film 19 | | PRIMAL^{™} HA 8 | 0.5 g/m² | 52.2 (337) | 128.8 (831) |
| Comparative Film 20 | | PRIMAL^{™} TR 407 | 0.5 g/m² | 54.4 (351) | 287.7 (1856) |

**Table 15 - Free Shrinkage Properties of Example Films**

| **Coated Film** | **Free Shrinkage CD (%)** | **Free Shrinkage MD (%)** |
|---|---|---|
| Comparative Film 3 | 27 | 65 |
| Comparative Film 4 | 6 | 29 |
| Inventive Film 5 | 30 | 67 |
| Comparative Film 6 | 23 | 65 |
| Comparative Film 7 | 23 | 69 |
| Comparative Film 8 | 24 | 64 |
| Inventive Film 9 | 26 | 65 |
| Comparative Film 10 | 17 | 48 |
| Comparative Film 11 | 14 | 58 |
| Comparative Film 12 | 16 | 60 |
| Inventive Film 13 | 5 | 47 |
| Comparative Film 14 | 6 | 42 |
| Comparative Film 15 | 6 | 43 |
| Comparative Film 16 | 6 | 39 |
| Inventive Film 17 | 6 | 25 |
| Comparative Film 18 | 4 | 21 |
| Comparative Film 19 | 5 | 22 |
| Comparative Film 20 | 6 | 28 |

Application of the acrylic-based coating to a multilayer film in accordance with embodiments of the present disclosure provides a significant decrease in heat seal force compared to both (a) adhesion between two uncoated multilayer films and (b) adhesion between an uncoated multilayer film and a multilayer film coated with comparative acrylic-based coatings. Also, the coating does not adversely affect the coated multilayer film's ability to shrink.

It will be apparent in combination with the claims and drawings that use of the singular also includes the possibility of the plural. For example, reference to a coating layer also implicitly includes reference to at least one coating layer.

## Claims

1. A heat-shrinkable film comprising:
(a) a multilayer film comprising:
i) a first layer comprising from 30 to 100 percent by weight of a first ethylene-based polymer, the first ethylene-based polymer having: a density from 0.905 to 0.930 g/ cm³ when measured according to the method in the description; a melt index (I₂) of 0.1 to 2.0 g/10 min when measured according to ASTM D 1238 at 190°C and 2.16 kg load; and a peak melting point of less than 126 °C as measured using Differential Scanning Calorimetry (DSC);
(ii) a second layer comprising from 50 to 100 percent by weight of a second ethylene-based polymer, the second ethylene-based polymer having: a density from 0.905 to 0.970 g/cm³ when measured according to the method in the description and a peak melting point in the range of 100 °C to 135 °C as measured using DSC; and
(iii) at least one inner layer between the first layer and the second layer, the inner layer comprising from 10 to 50 percent by weight of a third ethylene-based polymer having a density from 0.930 to 0.970 g/cm³ when measured according to the method in the description and a peak melting point in the range of 120 °C to 135 °C as measured using DSC; and
(b) a coating on an outer surface of the first layer or second layer of the film, the coating is formed from an aqueous acrylic-based composition comprising:
from 30 to 90 wt.% (on a dry wt. basis) of an acrylic resin;
from 0.01 to 2.0 wt.% (on a dry wt. basis) of a polyvalent metal crosslinking agent; and
from 0.1 to 6.0 wt.% (on a dry wt. basis) of a surface active agent.

2. A heat-shrinkable film comprising:
(a) a monolayer film comprising from 30 to 60 percent by weight of a fourth ethylene-based polymer, where the fourth ethylene-based polymer has a density of 0.905 to 0.930 g/cm³ when meascured according to the method in the description, a melt index (12) of 0.1 to 0.9 g/10 min when measured according to ASTM D 1238 at 190°C and 2.16 kg load; and a peak melting point of less than 126 °C, as measured using Differential Scanning Calorimetry (DSC);
(b) a coating on an outer surface of the monolayer film, the coating is formed from an aqueous acrylic-based composition comprising:
• from 30 to 90 wt.% (on a dry wt. basis) of an acrylic resin;
• from 0.01 to 2.0 wt.% (on a dry wt. basis) of a polyvalent metal crosslinking agent; and
• from 0.1 to 6.0 wt.% (on a dry wt. basis) of a surface active agent.

3. The film of claims 1 or 2, wherein the acrylic resin is a copolymer of C1-C8 alkyl esters of acrylic acid or methacrylic acid, (meth)acrylonitrile, and a dicarboxylic acid.

4. The film of claim 3, wherein the acrylic resin is a copolymer of 40 to 90 wt.% of the C1-C8 alkyl esters of acrylic acid or methacrylic acid, from 9 to 50 wt.% of the (meth)acrylonitrile, and 1 to 15 wt.% of a dicarboxylic acid.

5. The film of claims 3 or 4, wherein the C1-C8 alkyl esters of acrylic acid or methacrylic acid is ethyl (meth)acrylate.

6. The film of claims 3-5, wherein the dicarboxylic acid is an α,β-ethylenically unsaturated dicarboxylic acid.

7. The film of claims 1-6, wherein the polyvalent metal of the polyvalent metal crosslinking agent is zinc, cadmium, or zirconium.

8. The film of claims 1-7, wherein the surface active agent is an N-alkyl sulfosuccinamate, dialkyl sulfosuccinates, alkyl sulfates and sulfonates, alkyl polyalkylene oxidesulfates, alkyl aryl polyalkylene oxidesulfates, alkyl aryl sulfonates, alkyl polyalkylene oxides, alkyl aryl polyalkyleneoxides, or combinations thereof.

9. A packaging assembly comprising:
a plurality of packages, wherein each package comprises a plurality of items bundled together by a primary packaging film comprised of polymeric material, where the primary packaging film is wrapped around the plurality of items to form a primary package; and
a secondary packaging film used to bundle the plurality of packages, wherein the secondary packaging film comprises the heat-shrinkable film of any of the preceding claims.

10. A method of unitizing polymer wrapped primary packages, the method comprising:
wrapping one or more of the primary packages with the heat-shrinkable film of any of claims 1 to 8 such that the coating is disposed proximal to the one or more primary packages; and
applying thermal energy to reduce the dimensions of the heat-shrinkable film to constrain the primary package within the heat-shrinkable film.

## Patentansprüche

1. Wärmeschrumpfbare Folie, umfassend:
(a) eine mehrschichtige Folie, umfassend:
(i) eine erste Schicht, umfassend zu 30 bis 100 Gew.-% ein erstes Polymer auf Ethylenbasis, wobei das erste Polymer auf Ethylenbasis aufweist: eine Dichte von 0,905 bis 0,930 g/cm³, wenn gemessen gemäß dem Verfahren in der Beschreibung; einen Schmelzindex (I₂) von 0,1 bis 2,0 g/10 min, wenn gemessen gemäß ASTM D 1238 bei 190 °C und 2,16 kg Last; und einen Spitzenschmelzpunkt von weniger als 126 °C, gemessen unter Verwendung von Differential Scanning Calorimetry (DSC);
(ii) eine zweite Schicht, umfassend zu 50 bis 100 Gew.-% ein zweites Polymer auf Ethylenbasis, wobei das zweite Polymer auf Ethylenbasis aufweist: eine Dichte von 0,905 bis 0,970 g/cm³, wenn gemessen gemäß dem Verfahren in der Beschreibung, und einen Spitzenschmelzpunkt in dem Bereich von 100 °C bis 135 °C, gemessen unter Verwendung von DSC; und
(iii) mindestens eine Innenschicht zwischen der ersten Schicht und der zweiten Schicht, die Innenschicht umfassend zu 10 bis 50 Gew.-% ein drittes Polymer auf Ethylenbasis, das eine Dichte von 0,930 bis 0,970 g/cm³ aufweist, wenn gemessen gemäß dem Verfahren in der Beschreibung, und einen Spitzenschmelzpunkt in dem Bereich von 120 °C bis 135 °C, gemessen unter Verwendung von DSC; und
(b) eine Beschichtung auf einer Außenoberfläche der ersten Schicht oder der zweiten Schicht der Folie, wobei die Beschichtung aus einer wässrigen Zusammensetzung auf Acrylbasis ausgebildet ist, umfassend:
zu 30 bis 90 Gew.-% (auf einer trockenen Gew.-Basis) ein Acrylharz;
zu 0,01 bis zu 2,0 Gew.-% (auf einer trockenen Gew.-Basis) ein mehrwertiges Metallvernetzungsmittel; und
zu 0,1 bis 6,0 Gew.-% (auf einer trockenen Gew.-Basis) ein oberflächenaktives Mittel.

2. Wärmeschrumpfbare Folie, umfassend:
a) eine Monoschichtfolie, umfassend zu 30 bis 60 Gew.-% ein viertes Polymer auf Ethylenbasis, wobei das Polymer auf Ethylenbasis eine Dichte von 0,905 bis 0,930 g/cm³ aufweist, wenn gemessen gemäß dem Verfahren in der Beschreibung,
einen Schmelzindex (I2) von 0,1 bis 0,9 g/10 min, wenn gemessen gemäß ASTM D 1238 bei 190 °C und 2,16 kg Last; und einen Spitzenschmelzpunkt von weniger als 126 °C, gemessen unter Verwendung von Differential Scanning Calorimetry (DSC);
b) eine Beschichtung auf einer Außenoberfläche der Monoschichtfolie, wobei die Beschichtung aus einer wässrigen Zusammensetzung auf Acrylbasis ausgebildet ist, umfassend:
• zu 30 bis 90 Gew.-% (auf einer trockenen Gew.-Basis) ein Acrylharz;
• zu 0,01 bis 2,0 Gew.-% (auf einer trockenen Gew.-Basis) ein mehrwertiges Metallvernetzungsmittel; und
• zu 0,1 bis 6,0 Gew.-% (auf einer trockenen Gew.-Basis) ein oberflächenaktives Mittel.

3. Folie nach Anspruch 1 oder 2, wobei das Acrylharz ein Copolymer aus C1-C8-Alkylestern von Acrylsäure oder Methacrylsäure, (Meth)acrylnitril und einer Dicarbonsäure ist.

4. Folie nach Anspruch 3, wobei das Acrylharz ein Copolymer zu 40 bis 90 Gew.-% das C1-C8-Alkylester von Acrylsäure oder Methacrylsäure ist, zu 9 bis 50 Gew.-% das (Meth)acrylnitril und zu 1 bis 15 Gew.-% eine Dicarbonsäure.

5. Folie nach Anspruch 3 oder 4, wobei die C1 -C8-Alkylester der Acrylsäure oder Methacrylsäure Ethyl(meth)acrylat sind.

6. Folie nach den Ansprüchen 3 bis 5, wobei die Dicarbonsäure eine α,β-ethylenisch ungesättigte Dicarbonsäure ist.

7. Folie nach den Ansprüchen 1 bis 6, wobei das mehrwertige Metall des mehrwertigen Metallvernetzungsmittels Zink, Cadmium oder Zirkonium ist.

8. Folie nach den Ansprüchen 1 bis 7, wobei das oberflächenaktive Mittel ein N-Alkylsulfosuccinamat, Dialkylsulfosuccinate, Alkylsulfate und -Sulfonate, Alkylpolyalkylenoxidsulfate, Alkylarylpolyalkylenoxidsulfate, Alkylarylsulfonate, Alkylpolyalkylenoxide, Alkylarylpolyalkyloxide oder Kombinationen davon ist.

9. Verpackungsanordnung, umfassend:
eine Vielzahl von Verpackungen, wobei jede Verpackung eine Vielzahl von Gegenständen umfasst, die durch eine primäre Verpackungsfolie, die aus Polymermaterial besteht, gebündelt sind, wobei die primäre Verpackungsfolie um die Vielzahl von Gegenständen gewickelt ist, um eine primäre Verpackung auszubilden; und
eine sekundäre Verpackungsfolie, die verwendet wird, um die Vielzahl von Verpackungen zu bündeln, wobei die sekundäre Verpackungsfolie die wärmeschrumpfbare Folie nach einem der vorstehenden Ansprüche umfasst.

10. Verfahren zum Unifizieren von Polymer-umwickelten primären Verpackungen, das Verfahren umfassend:
derartiges Umwickeln eines oder mehrerer der primären Verpackungen mit der wärmeschrumpfbaren Folie nach einem der Ansprüche 1 bis 8, dass die Beschichtung proximal zu dem einen oder den mehreren primären Verpackungen angeordnet ist; und
Anwenden von Wärmeenergie, um die Abmessungen der wärmeschrumpfbaren Folie zu reduzieren, um die primäre Verpackung innerhalb der wärmeschrumpfbaren Folie zu begrenzen.

## Revendications

1. Film thermorétractable comprenant :
(a) un film multicouche comprenant :
(i) une première couche comprenant de 30 à 100 pour cent en poids d'un premier polymère à base d'éthylène, le premier polymère à base d'éthylène ayant : une masse volumique allant de 0,905 à 0,930 g/cm³ lorsqu'on mesure selon le procédé dans la description ; un indice de fusion (I₂) de 0,1 à 2,0 g/10 min lorsqu'on mesure selon ASTM D 1238 à 190 °C et une charge de 2,16 kg ; et un point de pic de fusion inférieur à 126 °C tel que mesuré en utilisant une calorimétrie différentielle à balayage (DSC) ;
(ii) une deuxième couche comprenant de 50 à 100 pour cent en poids d'un deuxième polymère à base d'éthylène, le deuxième polymère à base d'éthylène ayant : une masse volumique de 0,905 à 0,970 g/cm³ lorsqu'on mesure selon le procédé dans la description et un point de pic de fusion dans la plage de 100 °C à 135 °C tel que mesuré en utilisant une DSC ; et
(iii) au moins une couche interne entre la première couche et la deuxième couche, la couche interne comprenant de 10 à 50 pour cent en poids d'un troisième polymère à base d'éthylène ayant une masse volumique de 0,930 à 0,970 g/cm³ lorsqu'on mesure selon le procédé dans la description et un point de pic de fusion dans la plage de 120 °C à 135 °C tel que mesuré en utilisant une DSC ; et
(b) un revêtement sur une surface externe de la première couche ou deuxième couche du film, le revêtement est formé à partir d'une composition aqueuse à base d'acrylique comprenant :
de 30 à 90 % en poids (sur une base de poids sec) d'une résine acrylique ;
de 0,01 à 2,0 % en poids (sur une base de poids sec) d'un agent de réticulation métallique polyvalent ; et
de 0,1 à 6,0 % en poids (sur une base de poids sec) d'un agent tensioactif.

2. Film thermorétractable comprenant :
a) un film monocouche comprenant de 30 à 60 pour cent en poids d'un quatrième polymère à base d'éthylène, où le quatrième polymère à base d'éthylène a une masse volumique de 0,905 à 0,930 g/cm³ lorsqu'on mesure selon le procédé dans la description,
un indice de fusion (I2) de 0,1 à 0,9 g/10 min lorsqu'on mesure selon ASTM D 1238 à 190 °C et une charge de 2,16 kg ; et un point de pic de fusion inférieur à 126 °C, tel que mesuré en utilisant une calorimétrie différentielle à balayage (DSC) ;
b) un revêtement sur une surface externe du film monocouche, le revêtement est formé à partir d'une composition aqueuse à base d'acrylique comprenant :
• de 30 à 90 % en poids (sur une base de poids sec) d'une résine acrylique ;
• de 0,01 à 2,0 % en poids (sur une base de poids sec) d'un agent de réticulation métallique polyvalent ; et
• de 0,1 à 6,0 % en poids (sur une base de poids sec) d'un agent tensioactif.

3. Film selon les revendications 1 ou 2, dans lequel la résine acrylique est un copolymère d'esters alkyliques en C1 à C8 d'acide acrylique ou d'acide méthacrylique, de (méth)acrylonitrile, et d'un acide dicarboxylique.

4. Film selon la revendication 3, dans lequel la résine acrylique est un copolymère de 40 à 90 % en poids des esters alkyliques en C1 à C8 d'acide acrylique ou d'acide méthacrylique, de 9 à 50 % en poids du (méth)acrylonitrile, et de 1 à 15 % en poids d'un acide dicarboxylique.

5. Film selon les revendications 3 ou 4, dans lequel les esters alkyliques en C1 à C8 d'acide acrylique ou d'acide méthacrylique sont du (méth)acrylate d'éthyle.

6. Film selon les revendications 3 à 5, dans lequel l'acide dicarboxylique est un acide dicarboxylique à insaturation éthylénique α,β.

7. Film selon les revendications 1 à 6, dans lequel le métal polyvalent de l'agent de réticulation métallique polyvalent est zinc, cadmium, ou zirconium.

8. Film selon les revendications 1 à 7, dans lequel l'agent tensioactif est un sulfosuccinamate de N-alkyle, des sulfosuccinates de dialkyle, des sulfates et sulfonates d'alkyle, des oxyde-sulfates d'alkyl-polyalkylène, des oxyde-sulfates d'alkyl-aryl-polyalkylène, des sulfosuccinates d'alkyl-aryle, des oxydes d'alkyl-polyalkylène, des polyalkylèneoxydes d'alkyl-aryle, ou des combinaisons de ceux-ci.

9. Ensemble de conditionnement comprenant :
une pluralité de conditionnements, dans lequel chaque conditionnement comprend une pluralité d'articles emballés ensemble par un film de conditionnement primaire constitué de matériau polymère, où le film de conditionnement primaire est enveloppé autour de la pluralité d'articles pour former un conditionnement primaire ; et
un film de conditionnement secondaire utilisé pour emballer la pluralité de conditionnements, dans lequel le film de conditionnement secondaire comprend le film thermorétractable selon l'une quelconque des revendications précédentes.

10. Procédé d'unitisation de conditionnements primaires enveloppés de polymère, le procédé comprenant :
l'enveloppement d'un ou plusieurs des conditionnements primaires avec le film thermorétractable selon l'une quelconque des revendications 1 à 8 de telle sorte que le revêtement est disposé proximal par rapport au ou aux conditionnements primaires ; et
l'application d'énergie thermique pour réduire les dimensions du film thermorétractable pour contraindre le conditionnement primaire au sein du film thermorétractable.
